(19) Europäisches Patentamt

European Patent Office

Office européen des brevets

(11) EP 0 544 258 B1

(12) **EUROPEAN PATENT SPECIFICATION**

(45) Date of publication and mention
of the grant of the patent:
**29.05.1996 Bulletin 1996/22**

(51) Int Cl.⁶: **H04N 1/41**

(21) Application number: **92120093.7**

(22) Date of filing: **25.11.1992**

(54) **Image data compression method**

Bilddatenkompressionsmethode

Méthode de compression des données d'une image

(84) Designated Contracting States:
**DE FR GB**

(30) Priority: **27.11.1991 JP 337724/91**

(43) Date of publication of application:
**02.06.1993 Bulletin 1993/22**

(73) Proprietor: **YOZAN INC.**
**Tokyo 155 (JP)**

(72) Inventors:
• **Kumagai, Ryohei, c/o Ezel Inc.**
**Tokyo 112 (JP)**
• **Hong, Zi Quan, c/o Ezel Inc.**
**Tokyo 112 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 187 911        EP-A- 0 301 207**
**EP-A- 0 337 325**

## Description

The present invention relates to an image data compression method in accordance with the preamble part of claim 1.

Such a method is known from EP-A-0187911. This document discloses, in particular, a system for thresholding graphics images to reduce the information content for transmission and reproduction. According to the described thresholding technique, firstly, a histogram of the image to be encoded is generated and analysed to determine essential parameters. In particular, the background colour of the image is determined by summing the histogram elements to find the median of the distribution i.e., the point at which the half-sum of total pixels is reached. The extrema of the histogram are calculated and the skew is determined from the position of the median with respect thereto. If the difference between the median and the black extreme is less than half the difference between the median and the white extreme then the background of the image is deemed to be black, otherwise the image will be defined as having a white background. After the background colour is determined, the width of the background is determined form the difference between the median and the background colour extreme, and the edge between the background and the foreground regions, is defined as being at a distance one half of the background width from the median in the direction of the foreground colour extreme. A sequence of threshold levels may then be determined using this edge as a base, by setting them at points disposed at fractionally different distances between the edge and the foreground colour extreme.

There are various methods for compressing data and quantisation is one of them. "Quantisation" makes discrete values from all the density in an image.

Quantisation has been performed by obtaining error of the squared minimal mean value from the histogram of the image to be processed.

This is performed through obtaining the gravity of the area of the histogram in the range to be quantised. It is extremely difficult to calculate the gravity of the area by only hardware.

It is the object of the present invention to provide an image data compression method which may be performed by a simple hardware and which preserves the characteristics of the data to be processed.

This object is solved by the subject matter of claim 1.

Figure 1 shows a flowchart of an embodiment of the present invention.

Figure 2 shows a digital image.

Figure 3 shows an ideal histogram of a digital image.

Figure 4 shows an actual histogram of a digital image.

Figure 5 shows a histogram for explaining a representative density.

Figure 6 shows the step that adjacent 2 density are the representative density of the pair is selected and one of it is added to another one.

Figure 7 shows the step that adjacent 2 representative density are compared and the representative of the 2 density is furselected.

Figure 8 shows the process of image data comparing with respect to Figure 4.

Figure 9 shows the last step of image data compressing with respect to Figure 4.

Hereinafter an embodiment of the image data compressing method according to the present invention is described with reference to the attached drawings.

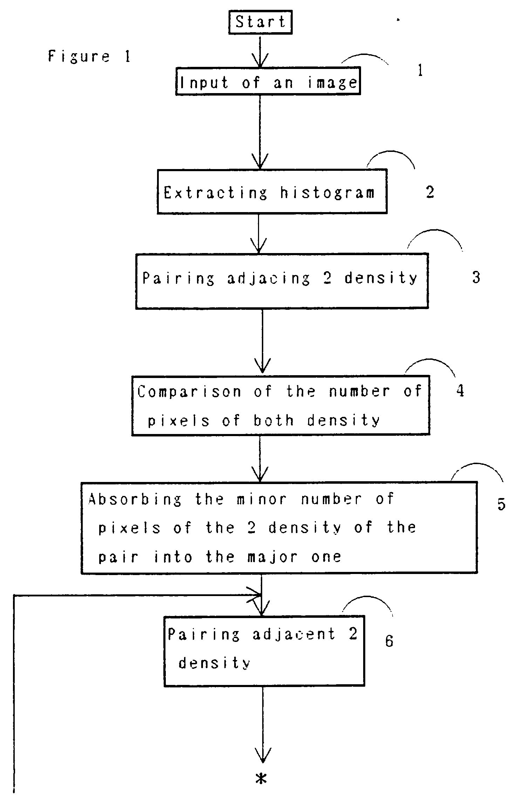

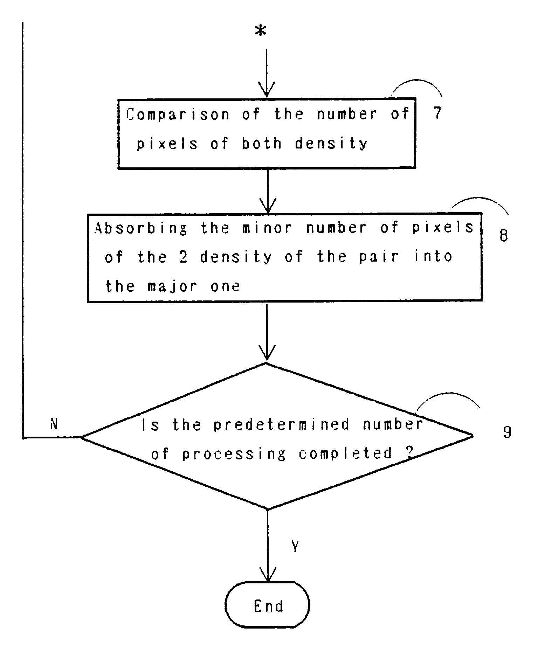

Figure 1 shows a flowchart of an embodiment of the present invention.

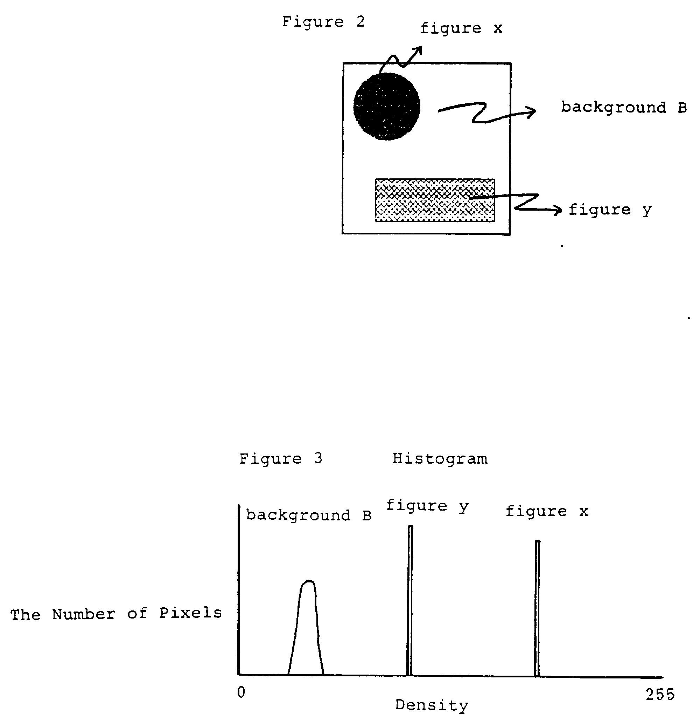

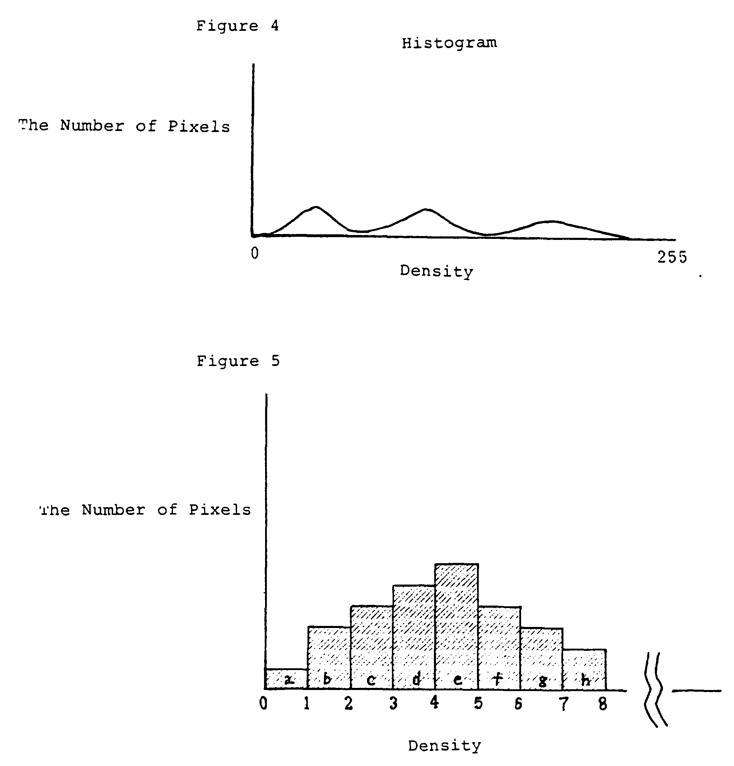

Figure 2 shows a digital image to be processed and Figure 3 is the ideal histogram of it, which comprises 3 density levels corresponding background B, figures "x" and "y". But actually, Figure 2 forms the histogram in Figure 4 in which the level of density are dispersed because the condition such as the resolution of a camera and lighting changes every input of an image.

The present invention quantize the realistic histogram in Figure 4 and extracts the compressed image data.

First, inputting an image by a CCD camera, for example, (step 1 in Figure 1), the histogram is extracted. Next, the representative density is selected for quantization. The way to obtain the representative density is described below according to the histogram in Figure 5.

Paring adjacent 2 density, such as density 0 and 1, 2 and 3 (step 3), the number of pixels in each density is compared (step 4). Comparing the number of pixels "a" of density 0 and "b" of density 1, the number of pixels "b" is more than "a". Comparing the number of pixels "c" of density 2 and "d" of density 3, the number of pixels "d" of density 3 is more than c.

In such a case, the minor number of pixels is absorbed into the major number of pixels (step 5). The pairs are represented by density 1 and 3, respectively.

When density is expressed by the density from 0 to 255, 128 pairs are compared every 2 density.

Generally, error is generated when an image is quantized. The error is rated by the mean squared one. The general formula is shown below for obtaining the mean square error on quantizing a histogram by the level "L".

$$\varepsilon^2 = \sum_{k=1}^{L} \int_{\theta_{k-1}}^{\theta_k} \{z(x, y) - g_k\}^2 p(z)\,dz$$

where,

"$\varepsilon^2$" is the mean squared error, "$z(x, y)$" is a density of a histogram,
"$g_k$" is the density on the location of the gravity between density $\theta_{k-1}$ and that $\theta_k$, "$p(z)$" is the number of pixels of the histogram,
"$L$" is the number of levels for quantizing the histogram,
"$\theta_k$" is the value of density "$k$" in the histogram,
"$k$" is a density.

The mean square error should be the minimum for optimal quantization. The error on a location is performed partial error by $g_k$ and the value performed partial error is changed 0 in order to obtain it. The formula is as below.

$$\frac{\partial \varepsilon^2}{\partial g_k} = \frac{\int_{\theta_{k-1}}^{\theta_k} \{z(x, y) - g_k\}^2 p(z)\,dz}{\int_{\theta_{k-1}}^{\theta_k} p(z)\,dz} = 0$$

This formula is for obtaining the minimal value of the mean square error. Regarding the histogram as a figure, this formula is equivalent to that the primary moment divided the area. That means, it is the one calculated the gravity of the area of a figure between $\theta_{k-1}$ and $\theta_k$ which are the density of the histogram.

The formula below is expressed generally so as to calculate the gravity of the area of the each divided histogram.

$$Q_k = Z_k + \frac{P_{(k+1)} + 2P_{(k+2)} + \cdots (j-1) P_{(k+j-1)}}{P_{(k)} + P_{(k+1)} + \cdots P_{(k+j-1)}}$$

where,

"$Q_k$" is the gravity of the area between density
"$k$" and "$k+j$" of a histogram,
"$Z_k$" is the value of density "$k$" of a histogram,
"$P_{(k)}$" is the number of pixels of density "$k$" of a histogram,
"$j$" is the number of density in the area of a divided histogram,
"$k$" is a density.

The formula below is for calculating the gravity of 2 adjacent density.

$$Q_k = Z_k + \frac{P(Z_{k+1})}{P(Z_k) + P(Z_{k+1})}$$

A gravity is calculated by comparing the number of pixels of both density through steps 1 to 5; the processing is equivalent to calculate the optimal quantizing level.

Though the number of pixels to be calculated is less than the formula of the general one and the image data is compressed, consequently, the effective data in the area is held.

Dividing the each pair of density which are paired on step 3 (step 6), it is compared the number of pixels of the representative density in the each part of a pair.

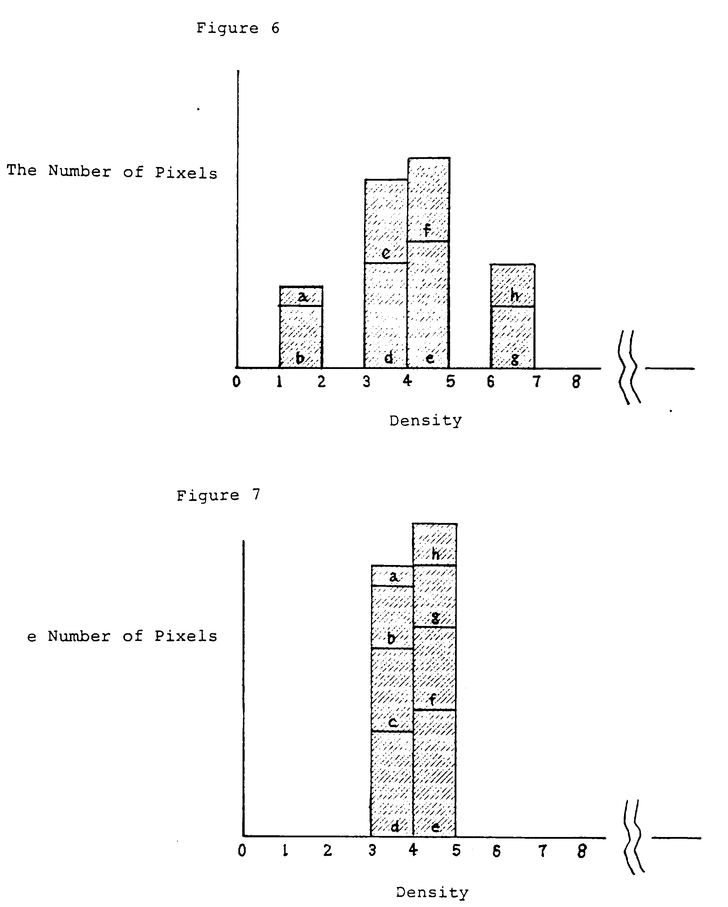

In Figure 6, the number of pixels of density 1 of (a+b) is the representative density through the comparison of the number of pixels on density 0 and that on density 1, and the number of pixels of density 3 of (c+d) is the representative density through the comparison of the number of pixels on density 3 and that on 4 (step 7). Comparing density 1 of (a+b) and 3 of (c+d), the number of pixels (c+d) of density 3 is more -han that (a+b). In the same way, comthe numbers of pixels (e+f) and (g+h), on density 4 and 6, respectively, (e+f) of density 4 is more than (g+h).

In such a case, as shown in Figure 7, the less, number of pixels is absorbed into the more number of pixels (step 8). The each adjacent 2 pairs are represented by density 3 and 4. That is, density 3 represents the density from 0 to 3, and density 4 represents those from 4 to 7 on this step.

The value through the processings above is the approximation value of the minimal mean square error gravity obtained by the general formula above. Good information is kept by simple processing.

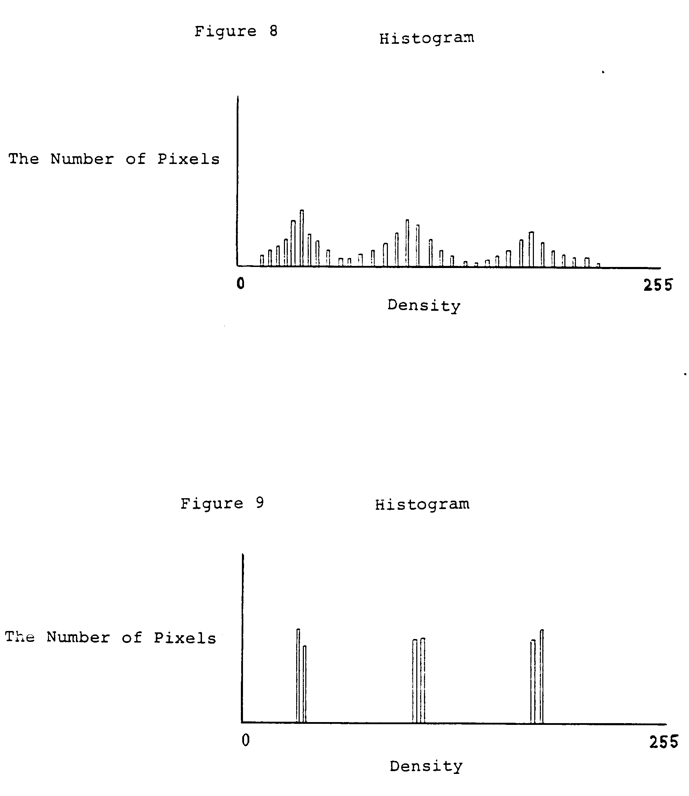

Repeating such processing by the predetermined times (step 9), quantization is further performed as in Figure 8. It is possible to compress image data as in Figure 9, finally. Usually the density of the image with the same background and figures is approximately the same in digital images. Even when density disperses a little, the compressed data obtained by absorbing the peripheral density into the most frequent density as the present invention keeps the characteristic data of the original image. Such compressed image data express the characteristic of the processed image clearly.

As the present invention of an image data compressing method simply compares the number of pixels of adjacent density, it is easy to realize by hardware and not necessary a complicated software.

As mentioned, it is easy to realize the image data compressing method according to the present invention by a hardware and keep the characteristic data of the image to be processed in maximum.

## Claims

1. Image data compressing method comprising the steps of:

   inputting (1) a digital image,

   calculating (2) a histogram of the density distribution of said image,

   **characterized by**

   comprising the further steps of:

   comparing (4) for every two adjacent densities of the histogram the number of pixels having these densities,

   omitting (5) that density of each density pair which has the minor number of pixels,

   adding (3) for each density pair the pixel number of the omitted density to the pixel number of the density having the major number of pixels and

   repeating the comparing, adding, and omitting step a predetermined number of times to obtain a histogram having a density distribution being characteristical for the content of the image.

## Patentansprüche

1. Bildverarbeitungsverfahren mit folgenden Schritten:

   Eingeben (1) eines digitalen Bildes,

   Berechnen (2) eines Histogramms der Dichteverteilung des Bildes,

   **gekennzeichnet durch** folgende weitere Schritte:

   Vergleichen (4) von jeweils zwei benachbarten Dichten des Histogramms bezüglich der Anzahl der Pixel, die diese Dichten aufweisen,

   Verwerfen (5) derjenigen Dichte eines jeden Dichtepaars, welches die geringere Pixelanzahl aufweist,

   Addieren der Pixelzahl der verworfenen Dichte mit der Pixelzahl der Dichte mit der größeren Anzahl von Pixel für jedes Dichtepaar, und

   Wiederholen des Vergleichs-, Addier- und Verwerfungs-Schrittes entsprechend einer vorgegebenen Anzahl, um ein Histogramm zu erhalten, dessen Dichteverteilung charakteristisch für den Inhalt des Bildes ist.

**Revendications**

1. Procédé de compression de données d'image comprenant les étapes de :

   entrée (1) d'une image numérique ;

   calcul (2) d'un histogramme de la distribution de densités de ladite image,

   caractérisé en ce qu'il comprend les étapes supplémentaires de :

   comparaison (4), pour chaque jeu de deux densités adjacentes de l'histogramme, du nombre de pixels présentant ces densités ;

   omission (5) de la densité de chaque paire de densités qui présente le nombre plus petit de pixels ;

   addition (3), pour chaque paire de densités, du nombre de pixels de la densité omise au nombre de pixels de la densité ayant le nombre le plus grand de pixels ; et

   répétition des étapes de comparaison, d'addition et d'omission un nombre prédéterminé de fois afin d'obtenir un histogramme présentant une distribution de densités qui est caractéristique du contenu de l'image.

Figure 1

```
                    ┌─────────┐
                    │  Start  │
                    └─────────┘
                         │
                         ▼
              ┌──────────────────────┐
              │   Input of an image  │        1
              └──────────────────────┘
                         │
                         │
                         ▼
          ┌──────────────────────────┐
          │   Extracting histogram   │        2
          └──────────────────────────┘
                         │
                         ▼
          ┌──────────────────────────────┐
          │ Pairing adjacing 2 density   │      3
          └──────────────────────────────┘
                         │
                         │
                         ▼
          ┌──────────────────────────────┐
          │ Comparison of the number of  │      4
          │  pixels of both density      │
          └──────────────────────────────┘
                         │
                         ▼
      ┌──────────────────────────────────────┐
      │  Absorbing the minor number of       │    5
      │  pixels of the 2 density of the      │
      │  pair into the major one             │
      └──────────────────────────────────────┘
                         │
         ┌───────────────┤
         │               ▼
         │      ┌──────────────────────┐
         │      │  Pairing adjacent 2  │    6
         │      │  density             │
         │      └──────────────────────┘
         │               │
         │               ▼
         │               *
```

*

```
┌────────────────────────────────┐
│ Comparison of the number of    │  7
│    pixels of both density      │
└────────────────────────────────┘
```

```
┌────────────────────────────────┐
│Absorbing the minor number of pixels│  8
│ of the 2 density of the pair into │
│ the major one                   │
└────────────────────────────────┘
```

N ── Is the predetermined number
         of processing completed ?        9

Y

End

Figure 2 figure x

background B

figure y

Figure 3    Histogram

background B    figure y    figure x

The Number of Pixels

0

Density

255

8

Figure 4

Histogram

The Number of Pixels

0                              255

Density

Figure 5

The Number of Pixels

a   b   c   d   e   f   g   h

0   1   2   3   4   5   6   7   8

Density

Figure 6

Figure 7

Figure 8          Histogram

The Number of Pixels

0                                    255

Density

Figure 9          Histogram

The Number of Pixels

0                                    255

Density